Europäisches Patentamt

(19) European Patent Office

Office européen des brevets

(11) Publication number: **0 291 962 B1**

(12) **EUROPEAN PATENT SPECIFICATION**

(45) Date of publication of patent specification:
11.09.91 Bulletin 91/37

(51) Int. Cl.⁵: **G01M 11/00**

(21) Application number: **88107974.3**

(22) Date of filing: **18.05.88**

(54) Method of measuring polarization and birefringence in single mode optical fibres.

(30) Priority: **20.05.87 IT 6743987**

(43) Date of publication of application:
**23.11.88 Bulletin 88/47**

(45) Publication of the grant of the patent:
**11.09.91 Bulletin 91/37**

(84) Designated Contracting States:
**DE FR GB NL SE**

(56) References cited:
**EP-A- 0 190 922**
**DE-A- 2 625 720**
**LASER FOCUS WITH FIBEROPTIC TECHNOLOGY, May 1983 S.C.RASHLEIGH et al.**
**"Preservation of Polarization in Single-Mode Fibers" pages 155-161**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Calvani, Riccardo**
**Strada Chieri 30/1**
**Pino Torinese (TO) (IT)**
Inventor: **Caponi, Renato**
**Via Pigafetta, 6**
**Torino (IT)**
Inventor: **Cisternino, Francesco**
**C. so Racconigi, 155**
**Torino (IT)**
Inventor: **Coppa, Gianni**
**Via Camerana, 4**
**Torino (IT)**

(74) Representative: **Riederer Freiherr von Paar zu Schönau, Anton et al**
**Van der Werth, Lederer & Riederer Freyung**
**615 Postfach 2664**
**W-8300 Landshut (DE)**

## Description

The present invention relates to optical fibre characterization, and more particularly to a method of detecting the local state of polarization and measuring birefringence in single mode optical fibres.

Optical fibres always exhibit a certain birefringence due to a difference of refractive index on two orthogonal axes (fibre birefringence axes). That difference arises both from the practical impossibility of manufacturing a perfectly circular fibre and from imperfections arising during the manufacturing process. Birefringence causes a variation in the state of polarization of a radiation propagating along the fibre. This phenomenon is characterized by a well-defined periodicity and the distance between two consecutive fibre points at which the propagating radiation presents the same state of polarization is called "beat length".

The knowledge of the birefringence characteristics of a single-mode optical fibre, and hence of the polarization of a radiation sent along same, is necessary in applications of single-mode fibres where polarization is exploited. Among those applications we may cite coherent optical communications, based on heterodyne or homodyne detection and requiring the interfering radiations (radiation containing the information and radiation emitted by a local oscillator) to have the same polarization, and optical-fibre sensors, in which fibres preserving a determined state of polarization are used.

Various methods are known for detecting the local state of polarization in single mode optical fibres and for measuring birefringence of same, and more particularly for measuring polarization beat length in high birefringence optical fibres. For example, the paper "Preservation of polarization in single-mode fibres", by S. C. Rashleigh and R.H. Stolen, Laser Focus — Fiberoptic Technology, May 1983, pages 155-161, describes a method in which a fibre end is illuminated so as to equally excite both fundamental modes, the intensity maxima of the light scattered due to Rayleigh scattering are transversally observed, and the average distance of such maxima on a rather long fibre trunk is measured : since the scattered radiation is polarized, the light emitted gives information on local polarization and hence the calculated distance corresponds to beat length.

This method has the disadvantages of requiring a high-power source (e.g. 50-100 mW), in order the scattered radiation can be detected without resorting to extremely sophisticated apparatus, and of providing inaccurate measurements, since the exact location of said maxima is difficult to detect ; moreover the optically inaccurate fibre cladding is to be removed to allow good observation.

The need for high-power sources and fibre cladding removal is eliminated by another method described by N. Chinone and R. Ulrich in the paper "Elasto-optic polarization measurement in optical fiber", Optics Letters, Vol. 6, No.1, January 1981, pages 16-18. According to that method, a transverse force is applied to the fibre and a polarization component is measured at the fibre output as a function of the force direction in a plane perpendicular to the fibre axis. The polarization value at the force application point is derived from the value of the state of polarization measured at the fibre output. The method supplies only an indirect measurement of the local polarization, since the state of polarization changes from the point of application of the force to the fibre output. It is then necessary to hypothize a mathematical model of fibre polarization behaviour by which the values measured at the output are to be evaluated to obtain the values of the local state of polarization : the method accuracy is bound by the precision of the hypothized model.

These disadvantages are overcome by the method of the invention, which allows a precise and direct measurement of local polarization, without resorting to high power sources and requiring fibre cladding removal.

Starting out from a method of detecting the local state of polarisation in single mode optical fibres, wherein a polarized radiation is sent into the fibre and the intensity of a transversally scattered radiation is measured, such method being known from DE-A-2625720, the method of the invention is characterized in that said transversally scattered radiation is generated by applying at a point of the fibre a constant force inducing a localized deformation of the fibre at that point, the force having fixed direction perpendicular to the fibre axis and such an intensity as to cause a power coupling from the fundamental mode, which is guided, to at least one secondary propagation mode, which is irradiated, and the local polarization component parallel to the force direction is obtained from the measured intensity.

The invention exploits the fact that the localized deformation, known per se e.g. from the paper "Fast heterodyne Michelson polarimeter for high-precision-fibre birefringence measurements", by R. Calvani, R. Caponi and F. Cisternino, presented at OF 'OOC '87, Reno, January 1987, paper THD4, causes a birefringence variation in the fibre with consequent reduction in the fibre guidance capacity in respect of the local polarization component parallel to the stress direction : hence a fraction of the propagating radiation which is substantially proportional to said component is extracted through lateral scattering.

The information obtained from the measurement concerns one component alone of scattered radiation. To exactly determine the state of polarization it will be useful to obtain information also on the perpendicular component. This can be obtained by submitting the fibre to a deformation caused by a force perpendicular to the preceding one, and measuring the intensity of the scattered radiation generated by said second perturbation.

In the method of the invention, it is preferred that in a manner known per se (the reference by Calvani, Caponi, Cisternino) the stress point is displaced along the fibre, the intensity of the scattered radiation as a function of the stress point is measured, and polarization beat length is determined as the distance between two consecutive points where the scattered radiation has the same intensity, and that the measurement is repeated at different time instants.

Preferably, the analyzed radiation has a wavelength slightly shorter than the fibre cutoff wavelength. Under these conditions the scattered radiation is irradiated at a certain distance from the stress point: this is advantageous in case of beat length measurement, since the detectors can be placed so as not to hinder the movements of the stressing devices; on the other hand, the polarization information obtained is always relevant to the stress point.

For a better understanding reference is now made to the annexed drawings, wherein :

— Fig. 1 is a schematic representation of the measuring apparatus ;

— Fig. 2 is a diagram showing the scattered light intensity as a function of the point of application of the force.

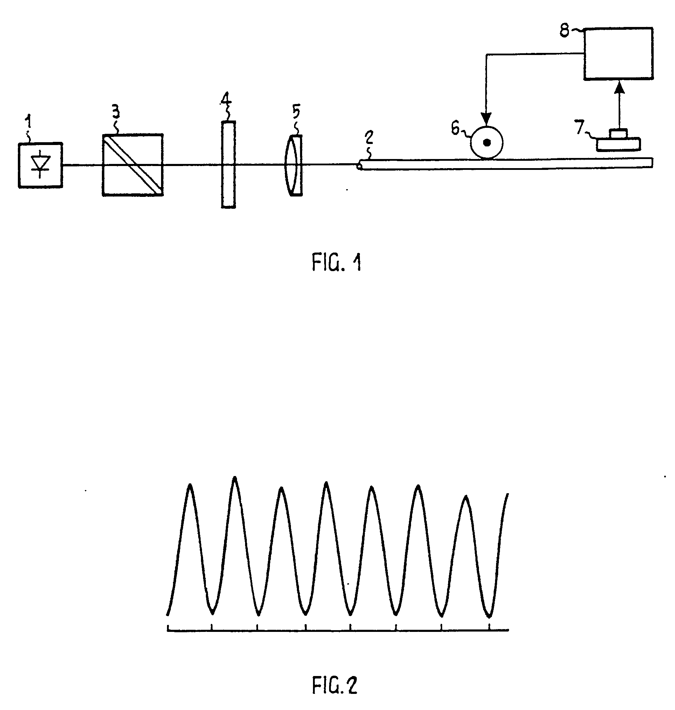

Referring to Figure 1, the apparatus comprises a quasi-monochromatic light source 1, e.g. a standard 1 mW He-Ne laser, which emits a radiation with a wavelength slightly shorter than the cutoff wavelength of a fibre 2 under test (e.g. about twenty nanometer less). A Glan Taylor prism 3 (or a similar device), a quarter-wave plate 4 and an optical system 5 focussing the radiation leaving plate 4 onto the input of fibre 2 are located between source 1 and fibre 2. Prism 3 and plate 4 make a circularly polarized radiation be present at the entrance of fibre 2. Thus, whatever the direction of fibre birefringence axes, the power transmitted along each of them is the same.

Fibre 2 can be either a high birefringence (or polarization-preserving) fibre, whose beat length is to be measured, or a conventional, low birefringence fibre, whose local polarization must be observed at one or more points.

A mechanical stressing system 6, schematically shown as a roller, acts on fibre 2 in order to apply a constant force to a fibre zone whose linear size, along the fibre axis, is very small if compared to the beat length of a high birefringence fibre (typically of the order of 1/100 of said length), and to displace the force application point along the fibre axis. System 6 may be the system described by R. Calvani, R. Caponi and F. Cisternino in the paper entitled : "Fast heterodyne Michelson polarimeter for high-precision-fiber birefringence measurements" presented at OFC/IOOC '87, Reno, January 1987, paper THD4. That system consists of an idle roller, having horizontal axis perpendicular to the fibre axis and a diameter such that the deformation may be considered point-like (e.g. a diameter of 1 cm), mounted on a lever and held in contact with the fibre by a weight carried by the lever. The lever is in turn pivotally mounted on a frame, which can be displaced in a controlled manner and has a base plate with a V-shaped groove housing the fibre.

The deformation caused by mechanical system 6 should be sufficiently strong as to cause a power coupling from the fundamental mode, which is guided within the fibre core, to a secondary mode, which is irradiated and laterally scattered. This can be achieved by a weight of the order of 0,1 Kg.

A detector 7 placed aside the fibre collects the scattered light and is associated with a measuring and computing system 8 which measures the intensity of the collected radiation, obtains therefrom the beat length (in case of a high birefringence fibre) and possibly displays its behaviour, and controls the displacement of mechanical system 6. Detector 7 has advantageously a rather large area, in order to collect as much scattered radiation as possible, and can be placed at a certain distance from mechanical system 6. In fact, by the choice made for the source wavelength, irradiation takes place at a distance from the stress point : in this way the detector does not hinder the displacements of mechanical system 6, which are of the order of some centimetres in case of measurement of beat-length of high birefringence fibres.

The operation of the described device can be immediately deduced from what stated above. In case of a low birefringence fibre, the mechanical system 6 is placed at the first point where the state of polarization is to be observed, a predetermined weight is placed on the lever and the scattered radiation due to the perturbation induced in the fibre is collected by detector 7. The intensity of the scattered radiation, which is proportional to the polarization component parallel to the direction of the applied force, is then determined by measuring and computing system 8. Mechanical system 6 and detector 7 are then moved to the subsequent measurement points, where the described operations are repeated. Various measurements can be performed at each point by using different weights. Said measurements can be repeated in different time instants in order to detect polarization fluctuations in the various fibre points. This information is useful to the investigation of polarization noise.

The operations are perfectly analogous in case of measurement of polarization beat length in a high birefringence fibre. In this case, the step-by step displacement of mechanical system 6 can be automatically controlled by measuring and computing system 8. System 8 measures the intensity at each stress point and obtains beat length LB as the distance between two points where the scattered radiation has the same intensity. In this case detector 7 can be located at a fixed point a few centimetres from the stress point, since the overall system displacement is also of a few centimetres. As an alternative, the detector can be made integral with the moving mechanical system so as to perform the measurement at a point near the stress point and at a fixed distance from it.

In this kind of fibre, the fibre length concerned by the measurement will contain a high number of beat lengths (beat length, in high birefringence fibres, is of the order of a millimetre) and system 8 will supply, as value of LB, an average of the measured values. Thus possible local fibre disuniformities can be compensated. If it is desired also to compensate possible systematic errors in the measurement instruments and mechanical inaccuracies, the measurement can be repeated in the opposite direction or with different weights, and an average of the values obtained can be calculated again.

Besides, the information obtained by the measurement concerns only a component of the scattered radiation. If information on the perpendicular component is also desired, a deformation can be induced in the fibre by applying a force perpendicular to the preceding one and with such a strength as to cause said power coupling, and the intensity of the scattered radiation generated as an effect of said second deformation is measured.

It is evident that the above description is given only by way of non limiting example and that variations and modifications are possible without going beyond the scope of the invention as claimed.

## Claims

1. A method of detecting the local state of polarisation in single mode optical fibres, wherein a polarized radiation is sent into the fibre and the intensity of a transversally scattered radiation is measured, characterized in that said transversally scattered radiation is generated by applying at a point of the fibre a constant force inducing a localized deformation of the fibre at that point, the force having fixed direction perpendicular to the fibre axis and such an intensity as to cause a power coupling from the fundamental mode, which is guided, to at least one secondary propagation mode, which is irradiated, and the local polarization component parallel to the force direction is obtained from the measured intensity.

2. A method according to claim 1, characterized in that a second transversally-scattered radiation is generated by applying to the fibre a second force, perpendicular to the preceding one and such as to cause a power coupling to a secondary mode which is irradiated, and the intensity of that second scattered radiation is measured.

3. A method according to claim 1 or 2, characterized in that the intensity measurement is repeated at different fibre points and at different instants.

4. A method according to claim 3 for measuring the birefringence of a high birefringence optical fibre, characterized in that the distance between two consecutive points wherein the scattered radiation has the same intensity is measured, such distance representing polarization beat length.

5. A method according to any preceding claim, characterized in that the measurement is effected by using a radiation with a wavelength slightly shorter than cutoff wavelength of the fibre higher-order modes.

## Patentansprüche

1. Verfahren zum Feststellen des örtlichen Polarisationszustands in einer Monomode-Lichtleitfaser, bei dem man eine polarisierte Strahlung in die Faser sendet und die Stärke einer in Querrichtung gestreuten Strahlung mißt, dadurch gekennzeichnet, daß man die in Querrichtung gestreute Strahlung dadurch erzeugt, daß man an einem Punkt der Faser eine konstante Kraft aufbringt, die eine örtliche Deformierung der Faser an diesem Punkt erzeugt, wobei die Kraft eine feste Richtung rechtwinklig zur Faserachse hat und so hoch ist, daß sie eine Leistungskopplung vom Grundmodus, der geführt ist, zu wenigstens einem sekundären Fortschreitungsmodus, der abgestrahlt wird, bewirkt, und daß man aus der gemessenen Stärke die parallel zur Kraftrichtung verlaufende lokale Polarisationskomponente ermittelt.

2. Verfahren nach Anspruch 1, dadurch gekennzeichnet, daß man eine zweite in Querrichtung gestreute Stahlung dadurch erzeugt, daß man auf die Faser eine zweite, auf der ersten Kraft senkrecht stehende Kraft so ausübt, daß eine Leistungskopplung zu einem Sekundärmodus, der abgestrahlt wird, bewirkt wird, und man die Stärke dieser zweiten gestreuten Stahlung mißt.

3. Verfahren nach Anspruch 1 oder 2, dadurch gekennzeichnet, daß man die Strahlungsstärkemessung an verschiedenen Punkten der Faser und zu unterschiedlichen Zeitpunkten wiederholt.

4. Verfahren nach Anspruch 3 zur Messung der Doppelbrechung einer Lichtleitfaser hoher Doppelbrechung, dadurch gekennzeichnet, daß man den bestand zwischen zwei aufeinanderfolgenden Punkten, an denen die gestreute Strahlung die gleiche Stärke hat, mißt, wobei dieser Abstand die Polarisationsschwebungslänge darstellt.

5. Verfahren nach einem der vorhergehenden Ansprüche, dadurch gekennzeichnet, daß man die Messung unter Verwendung einer Strahlung mit einer Wellenlänge bewirkt, die geringfügig kürzer ist als die Grenzwellenlänge der Moden höherer Ordnung der Faser.

## Revendications

1. Méthode de détection de l'état local de la polarisation dans des fibres optiques à mode unique, selon laquelle on envoie une radiation polarisée en la fibre et on mesure l'intensité d'une radiation diffusée transversalement, caractérisée en ce que cette radiation diffusée transversalement est engendrée en appliquant en un point de la fibre une force constante qui provoque une déformation localisée en ce point, la force ayant une direction fixe perpendiculaire à l'axe de la fibre et une intensité telle qu'elle provoque un couplage de puissance du mode fondamental, qui est guidé, à au moins un mode de propagation secondaire qui est rayonné, et on obtient de l'intensité mesurée la composante de polarisation locale parallèle à la direction de la force.

2. Méthode selon la revendication 1, caractérisée en ce qu'on engendre une seconde radiation diffusée transversalement en appliquant à la fibre une seconde force perpendiculaire à la précédente et telle qu'elle provoque un couplage de puissance à un mode secondaire qui est rayonné, et on mesure l'intensité de cette seconde radiation diffusée.

3. Méthode selon la revendication 1 ou 2, caractérisée en ce qu'on répète la mesure d'intensité en des points différents de la fibre et à des instants différents.

4. Méthode selon la revendication 3 pour mesurer la biréfringence d'une fibre optique à haute biréfringence, caractérisée en ce qu'on mesure la distance entre deux points consécutifs où la radiation diffusée a la même intensité, cette distance représentant la longueur de battement de la polarisation.

5. Méthode selon l'une quelconque des revendications précédentes, caractérisée en ce qu'on effectue la mesure en employant une radiation avec une longueur d'onde légèrement inférieure à la longueur d'onde de coupure des modes d'ordre supérieur de la fibre.

FIG. 1

FIG. 2